# EUROPEAN PATENT APPLICATION

(11) **EP 2 046 030 A1**
(43) Date of publication of application: **08.04.2009**
(21) Application number: 08751721.5
(22) Date of filing: 14.05.2008
(51) Int. Cl.: H04N 7/025, H04N 5/445, H04N 7/03, H04N 7/035

(54) **TELETEXT BROADCAST TRANSMISSION/RECEPTION CIRCUIT**

(30) Priority: 28.05.2007 JP 2007140887
(71) Applicant: Panasonic Corporation, Kadoma-shi Osaka 571-8501 (JP)
(72) Inventor: MIYASHITA, Kazuya c/o Panasonic Corporation IPROC, Osaka-shi Osaka 540-6207 (JP); KUZUMOTO, Keiichi c/o Panasonic Corporation IPROC, Osaka-shi Osaka 540-6207 (JP)
(74) Representative: Grünecker, Kinkeldey, Stockmair & Schwanhäusser Anwaltssozietät
(86) International application number: PCT/JP2008/001203
(87) International publication number: WO 2008/146454

(57) **Abstract**

A band-pass filter (131), which extracts a frequency component of a teletext reference signal from a digital input signal obtained by digitizing a composite signal, is provided in a frequency characteristic enhancement circuit (130). A determination circuit (145), which determines a state of the composite signal in accordance with maximum and minimum values of an output of the frequency characteristic enhancement circuit (130) during the period of the teletext reference signal and in accordance with maximum and minimum values of the output of the frequency characteristic enhancement circuit (130) during the period of time between a current horizontal synchronization interval and a next horizontal synchronization interval, is provided in a slicing circuit (140). A signal to be output to the slicing circuit (140) is generated by the frequency characteristic enhancement circuit (130) in accordance with either an output of the band-pass filter (131) or the digital input signal which is selected according to a determination result obtained by the determination circuit (145).

## Description

### TECHNICAL FIELD

The present invention relates to a teletext receiving circuit for receiving a teletext signal superimposed on a vertical blanking interval in an analog TV composite signal.

### BACKGROUND ART

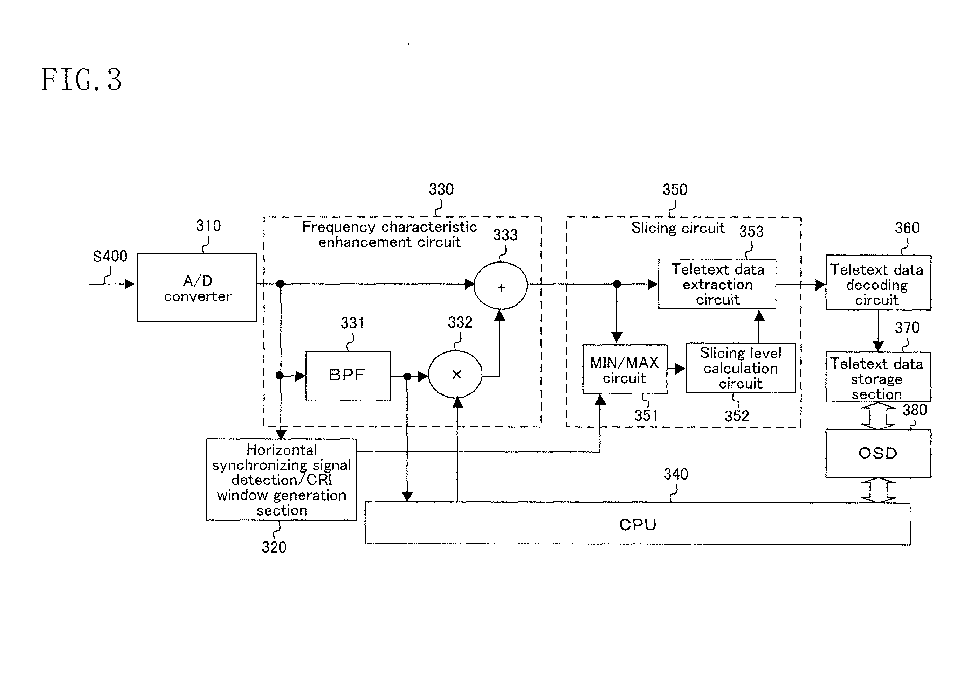

A teletext signal is sometimes superimposed on a vertical blanking interval in an analog TV composite signal. Examples of a teletext receiving circuit for receiving such a teletext signal include a circuit illustrated in a block diagram in FIG. **3****.** This teletext receiving circuit includes an A/D converter **310,** a horizontal synchronizing signal detection/CRI window generation section **320,** a frequency characteristic enhancement circuit **330,** a CPU **340,** a slicing circuit **350,** a teletext data decoding circuit **360,** a teletext data storage section **370,** and an OSD (On Screen Display) **380,** and receives an analog TV composite signal **S400.** A teletext signal is superimposed on the vertical blanking interval in the analog TV composite signal **S400.**

The A/D converter **310** digitizes the analog TV composite signal **S400** and outputs the digitized signal to the frequency characteristic enhancement circuit **330.**

The horizontal synchronizing signal detection/CRI window generation section **320** detects a horizontal synchronization interval in the analog TV composite signal **S400,** and, based on the detection result, generates a CRI window indicating a clock run-in (CRI) period showing a reference waveform for the teletext signal.

The frequency characteristic enhancement circuit **330** is a circuit for compensating for the frequency band of a CRI signal which is a reference signal for the teletext signal, and includes a band-pass filter **331** (which is abbreviated as BPF in the figure), a multiplier **332,** and an adder **333.**

The band-pass filter **331** only extracts a frequency of the input teletext signal that contains the clock run-in signal. The multiplier **332** multiplies the output of the band-pass filter **331** by a multiplier (which will be described later) provided by the CPU **340,** and outputs the multiplication result to the adder **333.** The adder **333** adds the output of the A/D converter **310** and the output of the multiplier **332** together and outputs the result to the slicing circuit **350.**

The CPU **340** monitors the amplitude of the output (i.e., the frequency component of the CRI signal) of the band-pass filter **331** and provides the multiplier **332** with the appropriate multiplier in accordance with the monitoring results. In this way, the target amplitude of the CRI signal is maintained without relying on an externally input amplitude. That is, the characteristics of the frequency component of the CRI signal are enhanced.

The slicing circuit **350** includes a MIN/MAX circuit **351,** a teletext data extraction circuit **353,** and a slicing level calculation circuit **352.** The MIN/MAX circuit **351** monitors the amplitude value during the CRI period indicated by the horizontal synchronizing signal detection/CRI window generation section **320,** and outputs the minimum and maximum of the amplitude value to the slicing level calculation circuit **352.** From the minimum and maximum values obtained by the MIN/MAX circuit **351,** the slicing level calculation circuit **352** determines a threshold value for binarizing the teletext signal and identifying 0/1, and outputs the threshold value to the teletext data extraction circuit **353.** From the threshold value provided by the slicing level calculation circuit **352,** the teletext data extraction circuit **353** substitutes data of 0/1 for the teletext signal data output from the frequency characteristic enhancement circuit **330,** and outputs the data of 0/1 to the teletext data decoding circuit **360** in the subsequent stage.

The teletext data decoding circuit **360** decodes the output of the teletext data extraction circuit **353** in accordance with a format in the broadcast system. The teletext data storage section **370** stores therein the output of the teletext data decoding circuit **360.**

Under control of the CPU **340,** the OSD **380** displays the teletext data in the teletext data storage section **370** on an output destination (for example, on the screen of a TV).

The operation of the teletext receiving circuit described above, in particular, the operation of the frequency characteristic enhancement circuit **330,** will be described in the order of signal flow.

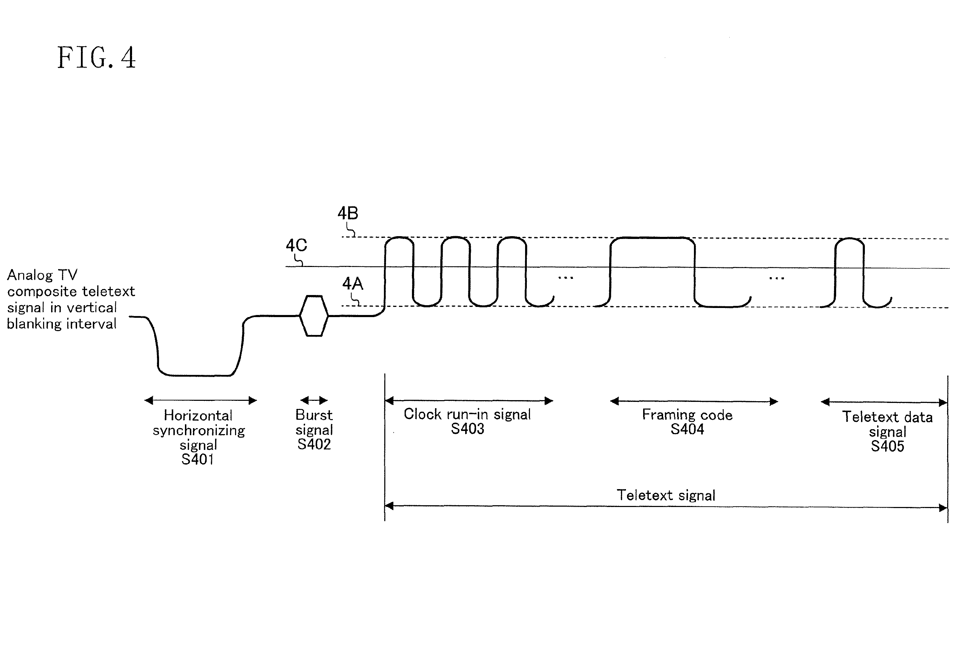

FIG. **4** shows an example of the waveform of the analog TV composite signal **S400** in the vertical blanking interval. Teletext signals are transmitted in accordance with systems which differ from area to area around the world, and these teletext signals can thus be identified by the broadcast systems, the transmission rates, the superimposition lines, etc. For example, for World System Teletext (which will be hereinafter referred to as "WST") transmitted in Europe, the transmission rate is 6.9375 MHz/bit, and the superimposition lines are from 7 to 22.

The analog TV composite signal **S400** is an example of a signal in the lines on which WST is superimposed. The analog TV composite signal **S400** contains a horizontal synchronizing signal **S401,** which determines a vertical location, and a burst signal **S402,** which is related to color signal demodulation technique. Also, a clock run-in signal **S403,** a framing code **S404,** and a teletext data signal **S405** are the elements forming the teletext signal.

The clock run-in signal **S403** is a reference for the teletext signal, and is related to a reference level for determining a value of 0/1 for the teletext data. In WST, the clock run-in signal **S403** is "1010101010101010" when 0/1 digitized, and has a frequency component of approximately 3.5 MHz. The framing code **S404** indicates the type of the teletext signal, and is "11100100" in WST. The teletext data signal **S405** is teletext data, and, in WST, always 42-byte data.

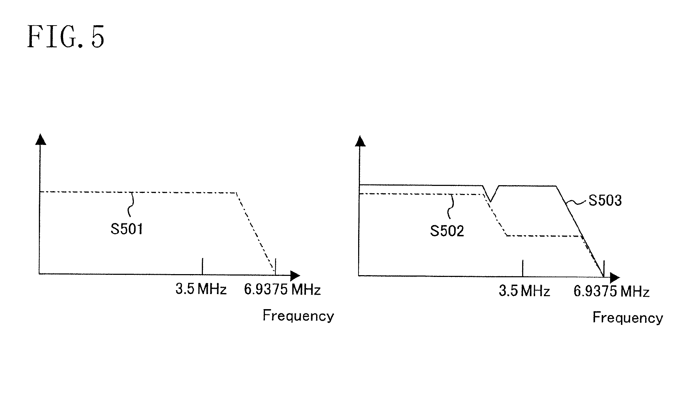

As indicated by S501 in FIG. **5****,** the analog TV composite signal **S400** has a band up to 6.3975 MHz, and when the analog TV composite signal **S400** passes through the frequency characteristic enhancement circuit **330,** a part in the vicinity of 3.5 MHz, which is the clock run-in signal **S403,** is amplified by the multiplier provided from the CPU **340.** Therefore, as indicated by S502 in FIG. **5****,** for example, when the amplitude characteristics of the clock run-in signal **S403** are not sufficient due to effects of the transmission path or the like, the frequency characteristics can be compensated for by the frequency characteristic enhancement circuit **330** as indicated by S503.

The MIN/MAX circuit **351** detects the minimum value **4A** (see FIG. **4**) and the maximum value **4B** (see FIG. **4**) of the amplitude during the CRI period indicated by the CRI window generated by the horizontal synchronizing signal detection/CRI window generation section **320,** and provides the detected values to the CPU **340.** From the minimum and maximum values **4A** and **4B** of the amplitude, the slicing level calculation circuit **352** determines the midpoint level **4C** (see FIG. **4**) as the slicing level for the 0/1 digitization. And the framing code **S404** and the teletext data signal **S405** are decoded using the midpoint level **4C** as the reference level.

As described above, the frequency characteristic enhancement circuit **330** amplifies the amplitude of the CRI signal band to increase the operation accuracy of the slicing circuit **350,** thereby contributing to the teletext signal receiving capability.

Other examples of a teletext receiving circuit include a circuit in which input data is binarized and decoded at a plurality of slicing levels to generate a plurality of pieces of decoded data, and then decoded data containing no errors is selected from those pieces of decoded data (see Patent Document 1, for example).
Patent Document 1: Japanese Laid-Open Publication No. 2004-40350

### DISCLOSURE OF THE INVENTION

### PROBLEM THAT THE INVENTION INTENDS TO SOLVE

However, in the above-described frequency characteristic enhancement circuit, when the input (i.e., the analog TV composite signal) is minute, it is not possible to make the amplitude of the teletext data satisfy the set slicing level just by amplifying the frequency band of the clock run-in signal, and thus the possibility that the teletext data would be erroneously extracted increases. This means that, in that case, the teletext data also needs amplitude amplification.

In view of the problem described above, the present invention has been made, and it is therefore an object of the present invention to provide a necessary signal amplitude to a signal which is input to a slicing circuit, even when an analog TV composite signal having a minute amplitude is input.

### MEANS FOR SOLVING THE PROBLEM

In order to achieve the object, an inventive teletext receiving circuit for receiving a teletext signal superimposed on a vertical blanking interval in an analog TV composite signal includes: a frequency characteristic enhancement circuit for amplifying a frequency band of the teletext signal when the frequency band has an amplitude lower than a predetermined level; and a slicing circuit for binarizing an output of the frequency characteristic enhancement circuit and outputting binarized data.

### EFFECTS OF THE INVENTION

According to the present invention, even when an analog TV composite signal having a minute amplitude is input, a necessary signal amplitude is provided to a signal which is input to a slicing circuit.

### BRIEF DESCRIPTION OF DRAWINGS

FIG. **1** is a block diagram illustrating the configuration of a teletext receiving circuit **100** according to a first embodiment.
FIG. **2** is a block diagram illustrating the configuration of a teletext receiving circuit **200** according to a second embodiment.
FIG. **3** is a block diagram illustrating an example of a conventional teletext receiving circuit.
FIG. **4** shows an example of the waveform of an analog TV composite signal in a vertical blanking interval.
FIG. **5** is an explanatory view of a teletext signal band.

### EXPLANATION OF THE REFERENCE CHARACTERS

- 100: Teletext receiving circuit
- 110: A/D converter
- 120: Horizontal synchronizing signal detection/CRI window generation section
- 130: Frequency characteristic enhancement circuit
- 131: Band-pass filter
- 132: Selection circuit
- 133: Multiplier
- 134: Adder
- 140: Slicing circuit
- 141: First MIN/MAX circuit
- 142: Second MIN/MAX circuit
- 143: Slicing level calculation circuit
- 144: Teletext data extraction circuit
- 145: Determination circuit
- 150: Teletext data decoding circuit
- 160: Teletext data storage section
- 170: OSD
- 180: CPU
- 200: Teletext receiving circuit
- 210: Low-pass filter
- 220: Weak electric field detection circuit
- S101: Analog TV composite signal
- S102: Digital input signal

### BEST MODE FOR CARRYING OUT THE INVENTION

Hereinafter, the embodiments of the present invention will be described with reference to the accompanying drawings. In the descriptions of the following embodiments, components having the same functions as those already described are identified by the same reference numerals, and the descriptions thereof will be omitted.

### (First embodiment)

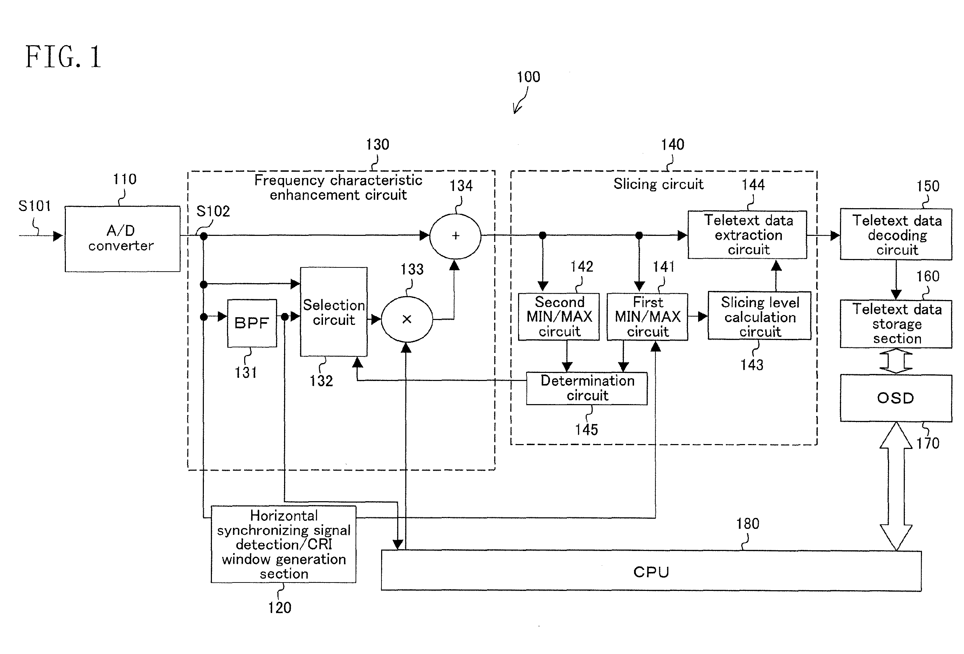

FIG. **1** is a block diagram illustrating the configuration of a teletext receiving circuit **100** according to a first embodiment of the present invention. As shown in FIG. **1**, the teletext receiving circuit **100** includes an A/D converter **110,** a horizontal synchronizing signal detection/CRI window generation section **120,** a frequency characteristic enhancement circuit **130,** a slicing circuit **140,** a teletext data decoding circuit **150,** a teletext data storage section **160,** an OSD (On Screen Display) **170,** and a CPU **180.**

The A/D converter **110** receives an analog TV composite signal **S101** and digitizes the input signal to output the digitized signal to the frequency characteristic enhancement circuit **130.** The analog TV composite signal **S101** is a signal in which a teletext signal is superimposed on the vertical blanking interval.

The horizontal synchronizing signal detection/CRI window generation section **120** detects a horizontal synchronization interval in the analog TV composite signal **S101,** and, based on the detection results, generates a CRI window indicating a clock run-in (which will be hereinafter referred to as "CRI") period showing a reference waveform for the teletext signal.

The frequency characteristic enhancement circuit **130** compensates for the frequency band of a CRI signal which is a reference signal for the teletext signal. The frequency characteristic enhancement circuit **130** includes a band-pass filter **131** (abbreviated as BPF in the figure), a selection circuit **132,** a multiplier **133,** and an adder **134.**

The band-pass filter **131** only extracts a frequency of the input teletext signal that contains the CRI signal (which is the reference signal for the teletext signal). For example, in a case in which the analog TV composite signal **S101** is World System Teletext (which will be hereinafter referred to as "WST") transmitted in Europe, the band-pass filter **131** is a digital band-pass filter that has a center frequency of approximately 3.5 MHz, which is the CRI signal frequency. In WST, the transmission rate is 6.9375 MHz/bit, and the superimposition lines are from 7 to 22.

The selection circuit **132** receives the output data (which will be called a digital input signal **S102**) of the A/D converter **110** and the output data of the band-pass filter **131,** and selects and outputs one of these input data in accordance with a determination result obtained by a determination circuit **145** (which will be described later) in the slicing circuit **140.**

The multiplier **133** multiplies the output of the selection circuit **132** by a multiplier (which will be described later) returned form the CPU **180.**

The adder **134** adds the multiplication result obtained by the multiplier **133** and the digital input signal **S102** together, and outputs the result to the slicing circuit **140** in the subsequent stage.

The slicing circuit **140** binarizes the output of the frequency characteristic enhancement circuit **130** and outputs the binarized data. The slicing circuit **140** includes a first MIN/MAX circuit **141,** a second MIN/MAX circuit **142,** a slicing level calculation circuit **143,** a teletext data extraction circuit **144,** and the determination circuit **145.**

The first MIN/MAX circuit **141** monitors the amplitude value of the output of the frequency characteristic enhancement circuit **130** during the CRI period, and detects and outputs the minimum and maximum of the amplitude value to the slicing level calculation circuit **143** and to the determination circuit **145.**

The second MIN/MAX circuit **142** detects the maximum and minimum of the output of the frequency characteristic enhancement circuit **130** during the period of time between the current horizontal synchronization interval and the next horizontal synchronization interval, and outputs the results to the determination circuit **145.**

The slicing level calculation circuit **143** determines a threshold value for identification of 0/1 of the teletext signal in accordance with the output of the first MIN/MAX circuit **141,** and outputs the threshold value to the teletext data extraction circuit **144.**

Based on the threshold value determined by the slicing level calculation circuit **143,** the teletext data extraction circuit **144** substitutes data of 0/1 for the teletext signal data output from the frequency characteristic enhancement circuit **130,** and outputs the data of 0/1 to the teletext data decoding circuit **150** in the subsequent stage.

The determination circuit **145** controls the selection of the output data by the selection circuit **132** in accordance with the maximum and minimum values output from the first MIN/MAX circuit **141** and the difference between these maximum and minimum values and in accordance with the maximum and minimum values output from the second MIN/MAX circuit **142** and the difference between these maximum and minimum values.

Specifically, when these four values, i.e., the maximum and minimum values output from the first MIN/MAX circuit **141** and the maximum and minimum values output from the second MIN/MAX circuit **142,** fall within a predetermined value range, the determination circuit **145** determines that the analog TV composite signal **S101** is a minute signal, and makes the selection circuit **132** select and output the digital input signal **S102.**

When the difference between the maximum and minimum values output from the first MIN/MAX circuit **141** is greater than a predetermined value, and the difference between the maximum and minimum values output from the second MIN/MAX circuit **142** is also greater than a predetermined value, the determination circuit **145** determines that a normal operation (i.e., an operation performed when the analog TV composite signal **S101** is a normal signal) is performed, and makes the selection circuit **132** select and output **the** output data of the band-pass filter **131.**

When the difference between the maximum and minimum values output from the first MIN/MAX circuit **141** is greater than a predetermined value while the difference between the maximum and minimum values output from the second MIN/MAX circuit **142** is smaller than a predetermined value, the determination circuit **145** determines that the analog TV composite signal **S101** is in an abnormal condition, and makes the selection circuit **132** select and output the digital input signal **S102** so as to amplify the band of the entire input signal.

The teletext data decoding circuit **150** decodes the output of the teletext data extraction circuit **144** in accordance with a format in the broadcast system.

The teletext data storage section **160** stores therein the output of the teletext data decoding circuit **150.**

Under control of the CPU **180,** the OSD **170** displays the teletext data in the teletext data storage section **160** on an output destination (for example, on the screen of a TV).

The CPU **180** monitors the amplitude of the CRI signal frequency band in the output of the band-pass filter **131,** and provides the multiplier **133** with an appropriate multiplier in accordance with the monitoring results so as to achieve the target signal amplitude.

### (Operation of the teletext receiving circuit 100)

When a signal having a minute amplitude is input to the teletext receiving circuit **100,** the amplitude of the CRI signal is also small. This causes the maximum and minimum values output from the first MIN/MAX circuit **141** to be smaller than usual, and thus the difference between these maximum and minimum values also becomes smaller. Furthermore, since the amplitude of the signal other than the CRI signal portion is also considered small, the maximum and minimum values output from the second MIN/MAX circuit **142** are also smaller than usual, and the difference between these maximum and minimum values thus becomes smaller. Therefore, the determination circuit **145** makes the selection circuit **132** select and output the digital input signal **S102.** On the other hand, the CPU **180** monitors the amplitude of the CRI signal frequency band in the output of the band-pass filter **131,** and provides the multiplier **133** with an appropriate multiplier in accordance with the monitoring results so as to achieve the target signal amplitude.

Consequently, the digital input signal **S102** itself is input to the multiplier **133,** so that not only the CRI signal band, but also the band of the entire input signal is amplified. And the adder **134** adds the multiplication result obtained by the multiplier **133** and the digital input signal **S102** together, and outputs the result to the slicing circuit **140.** As a result, a necessary sufficient signal amplitude is provided to the slicing circuit **140.**

At this time, the difference between the maximum and minimum values output from the first MIN/MAX circuit **141** is greater than a predetermined value, and the difference between the maximum and minimum values output from the second MIN/MAX circuit **142** is also greater than a predetermined value. In this case, the determination circuit **145** determines that a normal operation is performed, and makes the selection circuit **132** select and output the output data of the band-pass filter **131.**

However, even in the case in which the determination circuit **145** determines that a normal operation is performed, if the input to the teletext receiving circuit **100** continues to have a minute amplitude, only the frequency band of the CRI signal is amplified, which may cause the signal amplitude of the teletext data to fail to achieve the signal amplitude necessary for the slicing circuit **140.** In that case, it is considered that the difference between the maximum and minimum values output from the first MIN/MAX circuit **141** is greater than a predetermined value, while the difference between the maximum and minimum values output from the second MIN/MAX circuit **142** is smaller than a predetermined value.

Therefore, the determination circuit **145** determines that the input signal is in an abnormal condition, and makes the selection circuit **132** select and output the output of the A/D converter **110** so as to amplify the band of the entire input signal. As a result, a necessary sufficient signal amplitude is provided again to the slicing circuit **140.**

As described above, according to this embodiment, the detection results obtained by the first and second MIN/MAX circuits **141** and **142** are used in the determination circuit **145** to make determinations about the input signal and thereby identify each case. This allows the selection circuit **132** to select the signal band to be amplified. For example, when a minute signal is input, the entire band of the digital input signal **S102** is amplified.

Hence, even when a minute signal is input, a necessary signal amplitude is provided to the signal that is input to the slicing circuit **140,** thereby enabling the slicing level calculation and the teletext data extraction characteristics in the later stages to be enhanced.

It should be noted that the center frequency (3.5 MHz) of the band-pass filter **131** is just an example, and a reference signal frequency that each teletext signal has can be the center frequency of the filter.

### (Second embodiment)

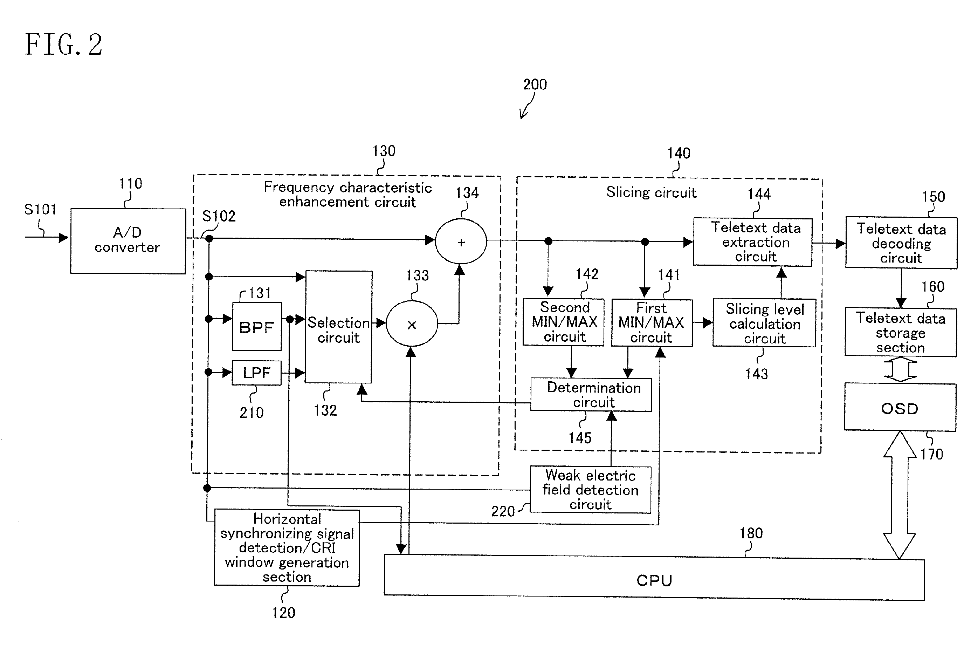

FIG. **2** is a block diagram illustrating the configuration of a teletext receiving circuit **200** according to a second embodiment of the present invention. As shown in FIG. **2****,** the teletext receiving circuit **200** is obtained by adding a low-pass filter **210** (which is abbreviated as LPF in the figure) and a weak electric field detection circuit **220** to the teletext receiving circuit **100.** As a result of the addition of theses members, the functions of the selection circuit **132** and of the determination circuit **145** are changed as will be described later.

The low-pass filter **210** is added to a frequency characteristic enhancement circuit **130.** The low-pass filter **210** is a digital low-lass filter for removing only part of an input teletext signal whose frequency is higher than a CRI signal frequency, and a digital input signal **S102** is input to the low-pass filter **210.**

In the teletext receiving circuit **200,** a selection circuit **132** receives the digital input signal **S102,** the output data of a band-pass filter **131,** and the output data of the low-pass filter **210,** and selects and outputs one of these three output data in accordance with a determination result obtained by a determination circuit **145.**

The weak electric field detection circuit **220** detects whether or not an analog TV composite signal **S101** has a weak electric field, and outputs the detection result to the determination circuit **145.** To be specific, the weak electric field detection circuit **220** detects whether or not the digital input signal **S102** is a signal having a small amplitude and a high noise ratio (i.e., a noise condition signal).

In the teletext receiving circuit **200,** when the weak electric field detection circuit **220** determines that the digital input signal **S102** is not a noise condition signal, the determination circuit **145** makes the selection circuit **132** select either the digital input signal **S102** or the output data of the band-pass filter **131** in accordance with the same determination criteria as in the first embodiment. On the other hand, when the weak electric field detection circuit **220** determines that the digital input signal **S102** is a noise condition signal, the difference between maximum and minimum values detected by a first MIN/MAX circuit **141** is equal to or smaller than a predetermined value, and the difference between maximum and minimum values detected by a second MIN/MAX circuit **142** is equal to or smaller than a predetermined value, then the determination circuit **145** makes the selection circuit **132** select and output the output data of the low-pass filter **210.**

### (Operation of the teletext receiving circuit 200)

The operation of the teletext receiving circuit **200** will be described by taking a case in which the analog TV composite signal **S101** is WST by way of example.

In a case in which a teletext signal is WST, if a signal having a weak electric field, that is, a signal having a small amplitude and a high noise ratio, is input to the teletext receiving circuit **200,** the analog TV composite signal **S101** is considered to have a minute amplitude and contain a signal whose frequency is higher than the transmission rate, i.e., 6.9375 MHz. Consequently, the difference between the maximum and minimum values output from the first MIN/MAX circuit **141** is small, and the difference between the maximum and minimum values output from the second MIN/MAX circuit **142** is also small. At the same time, the weak electric field detection circuit **220** detects the weak electric field condition.

Hence, the determination circuit **145** determines that the input signal has a weak electric field, and makes the selection circuit **132** select the output data of the low-pass filter **210** so as to remove the noise component whose frequency is higher than the transmission rate from the digital input signal **S102.**

On the other hand, the CPU **180** monitors the amplitude of the CRI signal frequency band in the output of the band-pass filter **131,** and provides a multiplier **133** with an appropriate multiplier in accordance with the monitoring results so as to achieve a signal amplitude necessary for a slicing circuit **140.** Then, the multiplier **133** multiplies the output data of the low-pass filter **210** by the provided multiplier, and outputs the result to an adder **134.** The adder **134** adds the multiplication result obtained by the multiplier **133** and the digital input signal **S102** together, and outputs the result to the slicing circuit **140.** As a result, the slicing circuit **140** is provided with the signal from which the highfrequency component noise, specific to the weak electric field condition, has been removed in advance and which has a necessary sufficient signal amplitude.

At this time, the difference between the maximum and minimum values output from the first MIN/MAX circuit **141** is greater than a predetermined value, and the difference between the maximum and minimum values output from the second MIN/MAX circuit **142** is also greater than a predetermined value. In this case, the determination circuit **145** determines that a normal operation is performed, and makes the selection circuit **132** select and output the output data of the band-pass filter **131.**

However, even in the case in which the determination circuit **145** determines that a normal operation is performed, if the input to the teletext receiving circuit **100** continues to have the weak electric field, only the frequency band of the CRI signal is amplified by the multiplier **133,** which may cause the signal amplitude of the teletext data to fail to achieve the signal amplitude necessary for the slicing circuit **140.** In that case, it is considered that the difference between the maximum and minimum values output from the first MIN/MAX circuit **141** is greater than a predetermined value, while the difference between the maximum and minimum values output from the second MIN/MAX circuit **142** is smaller than a predetermined value.

Therefore, the determination circuit **145** determines that the input signal is in an abnormal condition, and makes the selection circuit **132** select and output the output of the A/D converter **110** so as to amplify the band of the entire input signal. As a result, a necessary sufficient signal amplitude is provided again to the slicing circuit **140.**

As described above, according to this embodiment, the detection results obtained by the first and second MIN/MAX circuits **141** and **142** and obtained by the weak electric field detection circuit **220** are used in the determination circuit **145** to make determinations about the input signal and thereby identify each case. This allows the selection circuit **132** to select the signal band to be amplified. For example, when the analog TV composite signal **S101** is a noise condition signal, the entire band of the digital input signal **S102,** from which noise component has been removed, is amplified.

Accordingly, even in the case of a weak-electric-field input, it is possible to stably provide a necessary signal amplitude to the slicing circuit **140,** thereby enabling the slicing level calculation and the teletext data extraction characteristics in the later stages to be enhanced.

It should be noted that the cut-off frequency (which is the transmission rate, i.e., 6.9375 MHz, in the above-described example) of the low-pass filter **210** is just an example, and may be set by a signal band that each teletext signal has.

Moreover, the WST signals described as the teletext signal inputs in the first and second embodiments are also examples, and the teletext signal inputs may be any teletext signals around the world.

### INDUSTRIAL APPLICABILITY

In the teletext receiving circuits according to the present invention, even when an analog TV composite signal having a minute amplitude is input, a necessary signal amplitude is provided to a signal that is input to a slicing circuit. Thus, the inventive teletext receiving circuits are applicable to teletext receiving circuits for receiving a teletext signal superimposed on a vertical blanking interval in an analog TV composite signal, and the like.

## Claims

1. A teletext receiving circuit for receiving a teletext signal superimposed on a vertical blanking interval in an analog TV composite signal, the teletext receiving circuit comprising:
a frequency characteristic enhancement circuit for amplifying a frequency band of the teletext signal when the frequency band has an amplitude lower than a predetermined level; and
a slicing circuit for binarizing an output of the frequency characteristic enhancement circuit and outputting binarized data.

2. The teletext receiving circuit of Claim 1, wherein the slicing circuit includes:
a first MIN/MAX circuit for detecting maximum and minimum values of the output of the frequency characteristic enhancement circuit during a period of the teletext reference signal,
a second MIN/MAX circuit for detecting maximum and minimum values of the output of the frequency characteristic enhancement circuit during a period of time between a current horizontal synchronization interval and a next horizontal synchronization interval,
a slicing level calculation circuit for calculating, in accordance with an output of the first MIN/MAX circuit, a slicing level for binarizing the output of the frequency characteristic enhancement circuit,
a teletext data extraction circuit for binarizing the output of the frequency characteristic enhancement circuit according to the slicing level, and
a determination circuit for determining a state of the composite signal by using the maximum and minimum values obtained by the first MIN/MAX circuit and the maximum and minimum values obtained by the second MIN/MAX circuit; the frequency characteristic enhancement circuit includes:
a band-pass filter for extracting a frequency component of the teletext reference signal,
a selection circuit for selecting and outputting one of input signals in accordance with a determination result obtained by the determination circuit,
a multiplier for multiplying an output of the selection circuit by a multiplier determined according to the amplitude of an output of the band-pass filter, and
an adder for adding an output of the multiplier and the digital input signal together; and
the output of the band-pass filter and the digital input signal are input to the selection circuit.

3. The teletext receiving circuit of Claim 2, wherein when the four values, which are the maximum and minimum values detected by the first MIN/MAX circuit and the maximum and minimum values detected by the second MIN/MAX circuit, fall within a predetermined value range, the determination circuit determines that the composite signal is a minute signal, and when a difference between the maximum and minimum values obtained by the first MIN/MAX circuit is greater than a predetermined value, and a difference between the maximum and minimum values obtained by the second MIN/MAX circuit is smaller than a predetermined value, the determination circuit determines that the composite signal is in an abnormal condition; and
the selection circuit selects and outputs the digital input signal when the determination circuit makes the determinations of the minute signal and the abnormal condition, and the selection circuit selects and outputs the output of the band-pass filter in other cases.

4. The teletext receiving circuit of Claim 2, further comprising:
a weak electric field detection circuit for detecting whether or not the digital input signal is a noise condition signal,
wherein the frequency characteristic enhancement circuit further includes a low-pass filter for removing a part whose frequency is higher than the band of the teletext signal;
the determination circuit also uses a detection result obtained by the weak electric field detection circuit to determine the state of the composite signal; and
the selection circuit also receives an output of the low-pass filter.

5. The teletext receiving circuit of Claim 4, wherein when the weak electric field detection circuit detects that the digital input signal is a noise condition signal, a difference between the maximum and minimum values detected by the first MIN/MAX circuit is smaller than a predetermined value, and a difference between the maximum and minimum values detected by the second MIN/MAX circuit is smaller than a predetermined value, then the determination circuit determines that the digital input signal is a noise condition signal; and
when the determination circuit determines that the digital input signal is a noise condition signal, the selection circuit selects and outputs the output of the low-pass filter.

6. A teletext receiving method for receiving a teletext signal superimposed on a vertical blanking interval in an analog TV composite signal, the method comprising:
a frequency characteristic enhancement step for amplifying a frequency band of the teletext signal when the frequency band has an amplitude lower than a predetermined level; and
a slicing step for binarizing an output produced in the frequency characteristic enhancement step and outputting binarized data.
